# EUROPÄISCHE PATENTSCHRIFT

(11) **EP 2 832 418 B1**
(45) Veröffentlichungstag und Bekanntmachung des Hinweises auf die Patenterteilung: **05.09.2018**
(21) Anmeldenummer: 13178708.7
(22) Anmeldetag: 31.07.2013
(51) Int. Cl.: B22D 17/14, B22C 9/06, B01D 50/00, B22D 45/00, B01D 45/12

(54) **Reinigungsvorrichtung und deren Verwendung**
Cleaning device and use thereof
Dispositif de nettoyage et son utilisation

(43) Veröffentlichungstag der Anmeldung: 04.02.2015
(73) Patentinhaber: Bühler AG, 9240 Uzwil (CH)
(72) Erfinder: Stalder, Claude, 9200 Gossau (CH)
(74) Vertreter: Hepp Wenger Ryffel AG

(56) Entgegenhaltungen:
- EP-A2- 0 827 794
- DE-B1- 1 657 125
- FR-A- 1 303 756
- JP-A- H0 524 062
- US-A- 3 594 991

## Beschreibung

Die vorliegende Erfindung betrifft eine Reinigungsvorrichtung, welche insbesondere im Vakuumguss mit Druckgiessmaschinen eingesetzt werden kann.

Zur Herstellung von Giessteilen kann entsprechendes Giessmaterial in eine Giessform mit der Form des Giessteils entsprechenden Konturen eingeführt und dort erstarren gelassen werden. Für die Herstellung metallischer Giessteile wie beispielsweise Motorblöcken eignen sich Druckgiessmaschinen. Eine Druckgiessmaschine umfasst eine Giessform, welche zumindest aus zwei Formhälften (einer festen und einer beweglichen Formhälfte) besteht, die zusammen einen dem herzustellenden Bauteil entsprechenden Hohlraum (auch als Kavität oder Formkontur bezeichnet) bilden. In diesen Hohlraum wird eine Schmelze des zu formenden Materials, beispielsweise Aluminium, mit Hilfe eines Giesskolbens unter hoher Geschwindigkeit und hohem Druck gepresst. Nach Erstarren der Metallschmelze im Hohlraum wird die Form durch Bewegung der beweglichen Formhälfte geöffnet und das fertige gegossene Bauteil mit Hilfe von Auswerfern ausgeworfen.

Beispielhaft ist in der WO 2008/131571 A1 eine horizontale Zweiplatten-Druckgiessmaschine beschrieben. Diese Zweiplatten-Druckgiessmaschine umfasst eine bewegliche Aufspannplatte (BAP) und eine feste Aufspannplatte (FAP), an denen jeweils eine Giessformhälfte angeordnet ist. Durch Bewegung der beweglichen Aufspannplatte kann die Druckgiessform geöffnet und geschlossen werden. In geschlossener Stellung werden die beiden Aufspannplatten fest aneinander gepresst, so dass die beiden Giessformhälften eine geschlossene Form bilden. In die geschlossene Form wird eine Metallschmelze unter Druck eingeführt und unter Erstarrung abgekühlt. Das erstarrte Giessteil kann nach Öffnen der Form (durch Bewegung der beweglichen Aufspannplatte) entnommen werden.

Für den Automobilbau werden besondere Anforderungen an dünn- bis mittelwandige Strukturbauteile gestellt. Diese müssen unter anderem eine gute Schweissbarkeit, eine hohe mechanische Belastbarkeit und eine geringe Fertigungsstreuung aufweisen. Bei einem konventionellen Druckgiessverfahren besteht selbst bei guter Entlüftung der Form das Risiko von Luft- oder Gaseinschlüssen in der Schmelze, was zu unerwünschten Porositäten im Giessteil führen kann. Das Giessteil kann daher unter Umständen gerade die für den Automobilbau geforderten hohen Anforderungen nicht mehr zuverlässig erfüllen.

Als Alternative werden daher bestimmte Giessteile, beispielsweise für den Automobilbau, in einem Vakuum-Druckgiessverfahren hergestellt. Hierbei wird die in der Giessform vorhandene Gasatmosphäre zumindest teilweise, vorzugsweise so vollständig wie möglich, entfernt. Insbesondere für Giessteile, welche einer anschliessenden Wärmebehandlung unterzogen werden müssen, hat sich das Vakuum-Druckgiessverfahren als bevorzugtes Herstellungsverfahren erwiesen.

Für die Durchführung des Vakuum-Druckgiessverfahrens ist es erforderlich, dass die Druckgiessmaschine mit einer leistungsfähigen Vakuumausrüstung (insbesondere einer leistungsfähigen Vakuumpumpe und einer guten Vakuumregulierung) versehen ist und die Form- und Giessgarnitur gut gegen die Umgebung abgedichtet werden kann.

Zur Durchführung eines Vakuum-Druckgiessverfahrens ist in der Giessform ein Strömungskanal vorgesehen, der aus dem Hohlraum (auch als Kavität oder Formkontur bezeichnet), welcher dem herzustellenden Bauteil entspricht, in eine Gasleitung führt, welche an eine Vakuumpumpe angeschlossen ist. Die fluidische Verbindung zwischen Hohlraum und Vakuumpumpe kann mit Hilfe einer Schliessvorrichtung, vorzugsweise einem Ventil geöffnet und geschlossen werden. Das Vakuum-Druckgiessverfahren ist dem Fachmann bekannt.

Ein Problem beim Vakuum-Druckgiessverfahren besteht darin, dass bei der Entfernung der Gasatmosphäre aus dem Hohlraum der Form auch ein Teil des im Hohlraum, beziehungsweise in der mit dem Hohlraum verbundenen Giesskammer, befindlichen Giessmaterials sowie Schmiermittel- und Trennmittelrückstände mitgezogen werden und in die Vakuumpumpe gelangen beziehungsweise in den Vakuumleitungen und -ventilen zu Verengungen und im schlimmsten Fall zu Verstopfungen führen können. Dies führt letztendlich zu einer Zerstörung der Vakuumpumpe.

Es ist daher bereits in auf dem Markt befindlichen Vakuum-Druckgiessmaschinen ein Filter in den Strömungskanal eingebaut worden, welcher den Hohlraum der Form mit der Vakuumpumpe verbindet. Es hat sich aber gezeigt, dass der Anteil des mit der Gastatmosphäre aus dem Hohlraum herausgezogenen Giessmaterials so hoch ist, dass ein herkömmlicher Filter sehr schnell verstopft und entsprechend häufig ausgewechselt werden muss. Es kommt daher zu unerwünscht häufigen Betriebsunterbrüchen.

Es war die Aufgabe der vorliegenden Erfindung, eine Reinigungseinheit bereitzustellen, mit welcher eine Gasatmosphäre, insbesondere aus dem Hohlraum der Form einer Druckgiessmaschine, effizient gereinigt werden kann, ohne dass es hierbei zu häufigen wartungsbedingten Betriebsunterbrüchen kommt. Es war zudem die Aufgabe der vorliegenden Erfindung, eine Vorrichtung zur Herstellung von Giessteilen, vorzugsweise eine Druckgiessvorrichtung, bereitzustellen, welche insbesondere in einem Vakuumdruckgiessverfahren effizient ohne häufige wartungsbedingte Betriebsunterbrüche betrieben werden kann.

Die vorliegende Aufgabe wurde gelöst durch eine Reinigungsvorrichtung, insbesondere für eine Druckgiessvorrichtung, umfassend ein Gehäuse mit einem Einlass für zu reinigendes Medium, einen im Gehäuse stromabwärts vom Einlass angeordneten Fliehkraftabscheider, eine auf dem Gehäuse angeordnete und in den Fliehkraftabscheider ragende, an ihrem unteren Ende, vorzugsweise in ihre Bodenfläche, mindestens eine Öffnung aufweisende Einheit, wobei das zu reinigende Medium durch diese mindestens eine Öffnung in die Einheit eintreten kann, einen in der Einheit derart angeordneten Filtereinsatz, dass das zu reinigende Medium durch die Einheit nach oben strömt und dabei den in der Einheit angeordneten Filtereinsatz passiert, sowie einen stromabwärts des Filtereinsatzes angeordneten Auslass.

Die erfindungsgemässe Reinigungsvorrichtung beruht auf einer Kombination aus einem Fliehkraftabscheider und einem herkömmlichen Filterelement. Im Fliehkraftabscheider wird bereits ein wesentlicher Teil des mit dem Gas mitgezogenen Giessmaterials aus dem Gasstrom entfernt. Im herkömmlichen Filterelement erfolgt somit lediglich eine zusätzliche Entfernung verbliebenen Materials. Das herkömmliche Filterelement wird daher weniger belastet und verstopft weniger schnell. Die Anlage, in welche die erfindungsgemässe Reinigungsvorrichtung eingebaut ist, muss daher weniger häufig wartungsbedingt abgestellt werden.

Eie Kombination von Fliehkraftabscheider (auch als Tangentialabscheider bezeichnet) und herkömmlichen Filterelement ist im Stand der Technik in anderer Anordnung für andere Anwendungen vorgeschlagen worden.

In Der EP-2 364 229 B1 wird eine Kombination aus Fliehkraftabscheidung und herkömmlichen Filterelement zur Reinigung metallischen Giessmaterials für den Sandguss vor dessen Eintritt in die Form beschrieben. Wesentlich ist hierbei, dass das metallische Giessmaterials derart in den Fliehkraftabscheider geführt wird, dass es anfänglich Kontakt mit dem herkömmlichen Filterelement hat, bevor es durch den Fliehkraftabscheider geführt wird und durch das Filterelement in die Giessform austritt.

In der DE 198 05 205 A1 wird die Gasatmosphäre oberhalb eines gekühlten Stranggiesselements abgesaugt und sequentiell durch voneinander getrennte Fliehkraftabscheider-, Heiz- und Filterelemente geführt wird.

In der EP-0 580 005 B1 ist ein Abscheidesystem zur Entfernung von Partikeln, insbesondere Russpartikeln, aus Prozessgasen chemischer oder petrochemischer Anlagen beschrieben. In einer ersten Stufe werden die Partikel in einem Fliehkraftabscheider entfernt. In einer zweiten Stufe gelangt das vorgereinigte Prozessgas in ein Filterelement. Dieses Abscheidesystem weist als wesentliches Element Mittel zur thermischen Regenerierung des Filterelements auf, welche durch Abbrennen der zurückgehaltenen Russpartikel das Filterelement erneut beladbar machen. Der Aufbau des Abscheidesystems ist nicht näher beschrieben.

In der DE 10 2006 046 328 A1 ist eine Reinigungsvorrichtung für einen Staubsauger beschrieben, bei welcher die angesaugte Luft zunächst durch einen Tangential-Abscheider geführt wird, anschliessend am oberen Ende des Tangential-Abscheiders in einen axialen Zyklon-Abscheider gelangt und diesen von oben nach unten durchströmt, ehe die Luft über ein Filterelement aus dem Staubsauger geführt wird.

In Fig. 3 der US-3,594,991 wird zu reinigendes Medium in einen Tangentialabscheider geführt, wo es verwirbelt wird und anschliessend durch ein vertikales Rohr nach oben steigt. Das zu reinigende Medium tritt in einen Raum ein und erfährt anschliessend eine Strömungsumkehr. Das Medium wird von oben nach unten durch ein Filtermedium geführt und anschliessend aus der Öffnung 52 aus der Reinigungseinheit herausgeführt.

In der JP H05-24062 ist die Reinigungsvorrichtung beschrieben, in welcher Tangentialabscheider und Filter in einem einzigen Gehäuse angeordnet sind. Der Filter befindet sich zwischen den Wänden 2 des Tangentialabscheiders.

In der EP 0 827 794 A2 ist eine Vorrichtung beschrieben, welche für ein Vakuum-Druckgiessverfahren geeignet ist. In dieser Vorrichtung ist ein herkömmlicher Filter bzw. eine herkömmliche Waschbrettvorrichtung als Trennvorrichtung beschrieben.

In diesen Dokumenten ist die kompakte Reinigungsvorrichtung der vorliegenden Erfindung, bei welcher Fliehkraftabscheidung und herkömmliche Filterung in einem vergleichsweise kleinen einzigen Bauteil effizient durchgeführt werden kann, nicht beschrieben. Insbesondere beschreibt keines der vorstehend diskutierten Dokumente die Möglichkeit, eine derartige Reinigungseinheit effizient in einem Vakuum-Druckgiessverfahren beziehungsweise einer Druckgiessmaschine einzusetzen, d.h. dass eine derartige Reinigungsvorrichtung unter den Bedingungen des Druckgiessverfahrens (bei welchem die zu reinigende Gasatmosphäre und die zu entfernenden Partikel eine hohe Temperatur aufweisen) eingesetzt werden kann, ohne dass es zu häufigen wartungsbedingten Betriebsunterbrüchen kommt (d.h. die Reinigungsvorrichtung zeichnet sich durch eine hohe Toleranz gegenüber Verschmutzung aus).

Die erfindungsgemässe Reinigungsvorrichtung zeichnet sich durch eine kompakte Bauweise aus. Sie umfasst als wesentliche Bauteile einen in einem Gehäuse angeordneten Fliehkraftabscheider sowie ein Filterelement, welches in einer in den Fliehkraftabscheider ragendem Element angeordnet ist.

Das Gehäuse der erfindungsgemässen Reinigungseinheit kann jede gewünschte äussere Form aufweisen. Eine zylindrische äussere Form ist bevorzugt, da dann das Innere des Gehäuses bereits die für einen Tangentialabscheider erforderliche zylindrische Form besitzt.

In das Gehäuse mündet ein Einlass für das zu reinigende Medium, vorzugsweise eine aus dem Hohlraum einer Giessform stammende Gasatmosphäre. Vorzugsweise ist der Einlass im oberen Drittel des Gehäuses angeordnet, damit die Gasatmosphäre den Tangentialabscheider über eine zur Abtrennung ausreichenden Höhe durchströmt. Vorzugsweise sind an dem Einlass Vorrichtungen für eine, vorzugsweise hermetische, Verbindung der Reinigungsvorrichtung mit Bauteilen einer Anlage angeordnet.

Unter "hermetisch" soll hierbei erfindungsgemäss verstanden werden, dass die Verbindung zwischen Reinigungsvorrichtung und Bauteil der Anlage so gasdicht ist, dass das gewünschte angelegte Vakuum gehalten kann.

Erfindungsgemäss wird unter "Vakuum" ein gegenüber dem Atmosphärendruck verringerter Druck, vorzugsweise ein Druck im Bereich von 20 mbar bis 200 mbar, verstanden.

Erfindungsgemäss wird unter "stromaufwärts"' und "stromabwärts" eine Position verstanden, welche sich in der Strömungsrichtung des zu reinigenden Mediums vor oder nach einer bestimmten Position befindet.

Erfindungsgemäss wird unter einer "fluidischen Verbindung" verstanden, dass ein Fluid wie das zu reinigende Medium, vorzugsweise ein Gas, sich zwischen zwei Punkten bewegen kann, d.h. von einem Punkt zum anderen Punkt gelangen kann.

Erfindungsgemäss bevorzugt wird der Einlass der Reinigungsvorrichtung mit dem aus dem Hohlraum der Giessform einer Druckgiessmaschine kommenden Strömungskanal verbunden. Die Verbindung erfolgt hierbei vorzugsweise über einen Schnellspannverschluss (z.B. Schnellspannverschluss DN 40 ISO-KF).

In dem Gehäuse ist ein Fliehkraftabscheider (Tangential-Abscheider) angeordnet. Als Fliehkraftabscheider bezeichnet man Vorrichtungen, in denen aus einem Gemisch mindestens ein Teil durch Ausnutzung der Fliehkraft abgetrennt wird. Hierzu wird das Gemisch durch einen Einlass zugeführt, in Rotation versetzt, und anschließend wird der von dem abgeschiedenen Teil befreite Rest über einen Auslass entfernt. Fliehkraftabscheider sind dem Fachmann hinlänglich bekannt.

Bei der erfindungsgemässen Reinigungsvorrichtung kann in dem Gehäuse ein separater Tangentialabscheider angeordnet sein, z.B. wenn das Gehäuse nicht eine zylindrische Form aufweist. Vorzugsweise wird der Tangentialabscheider jedoch durch die zylindrische Innenwand des Gehäuses und den in das Gehäuse hineinragenden Teil der den Filtereinsatz umfassenden Einheit gebildet. Bei diesem in das Gehäuse und somit bei dieser Ausführungsform in den Tangentialabscheider hineinragenden Teil der den Filtereinsatz umfassenden Einheit handelt es sich vorzugsweise um ein zylindrisches Rohr. Dieser Teil, vorzugsweise das Rohr, bildet die innere Begrenzung des Raums, in dem das zu reinigende Medium durch den Tangentialabscheider strömen kann.

Das zu reinigende Medium, vorzugsweise eine aus dem Hohlraum einer Giessform oder aus einer Giesskammer stammende Gasatmosphäre, gelangt durch den Einlass der erfindungsgemässen Reinigungsvorrichtung in das Innere des Gehäuses und somit in den Tangentialabscheider. Gemäss der vorstehend beschriebenen bevorzugten Ausführungsform kann das zu reinigende Medium durch den Raum strömen, welcher durch die Innenwand des Gehäuses und die Aussenwand des in das Gehäuse hineinragenden Teils der den Filtereinsatz umfassenden Einheit, vorzugsweise ein zylindrisches Rohr, gebildet wird. Das Gehäuse ist oben geschlossen, so dass das durch den vorzugsweise im oberen Drittel des Gehäuses angeordneten Einlass eintretende zu reinigende Medium durch den vorstehend beschriebenen Raum durch den Tangentialabscheider nach unten strömt. Hierbei ist erfindungsgemäss zu gewährleisten, dass der vom zu reinigenden Medium durchströmte Raum gross genug ist, dass es während des Durchströmens des Mediums zu einer effektiven, fliehkraftbedingten Abscheidung von Partikeln aus dem Medium kommt. Das in das Gehäuse ragende Teil der in den Filtereinsatz umfassenden Einheit ragt entsprechend um diese erforderliche Länge in das Gehäuse und somit den Tangentialabscheider hinein. Die exakten Dimensionen können vom Fachmann entsprechend der gewünschten Anwendung einfach ermittelt werden.

Das Gehäuse und die den Filtereinsatz umfassende Einheit sind vorzugsweise einstückig ausgebildet, auf jeden Fall aber so miteinander verbunden, dass kein Medium zwischen dem Gehäuse und der Einheit austreten kann. Die Einheit befindet sich auf der Deckfläche des Gehäuses, wobei wie beschrieben ein Teil der Einheit durch die Deckfläche in das Gehäuse ragt. Gemäss einer bevorzugten Ausführungsform der vorliegenden Erfindung sind zumindest die mit dem zu reinigenden Medium in Kontakt kommenden Oberflächen von Gehäuse und Einheit derart ausgestaltet, dass durch das zu reinigende Medium nicht angegriffen werden. Da bei der erfindungsgemäss bevorzugten Ausführungsform der Verwendung der Reinigungseinheit in einem Vakuum-Druckgiessverfahren das zu reinigende Medium eine hohe Temperatur aufweisen und metallische Partikel oder Tropfen enthalten kann, sind die entsprechenden Oberflächen von Gehäuse und Einheit vorzugsweise aus rostfreiem Stahl gefertigt.

Auf einer geeigneten Höhe weist das in das Gehäuse ragende Teil der in den Filtereinsatz umfassenden Einheit mindestens eine Öffnung auf, durch welche das Medium aus dem Tangentialabscheider in diese Einheit wechseln kann. Vorzugsweise befindet sich diese mindestens eine Öffnung im unteren Drittel des in das Gehäuse ragenden Teils der in den Filtereinsatz umfassenden Einheit. Bevorzugt befindet sich diese Öffnung in der Bodenfläche des Teils, und besonders bevorzugt weist das Teil, insbesondere ein Rohr, eine offene Bodenfläche auf.

Gemäss der vorliegenden Erfindung strömt das zu reinigende Medium durch den Tangentialabscheider bis zu der mindestens einen Öffnung im in das Gehäuse ragenden Teil der in den Filtereinsatz umfassenden Einheit, vorzugsweise die offene Bodenfläche eines Rohrs, und tritt dort vom Tangentialabscheider in das Innere dieser Einheit über. Das Medium strömt durch den in das Gehäuse ragenden Teil der in den Filtereinsatz umfassenden Einheit nach oben und passiert dabei den in der Einheit angeordneten Filtereinsatz, wodurch es eine weitere Reinigung erfährt.

Das im Tangentialabscheider durch die Fliehkraft von dem Medium abgetrennte Material, beispielsweise metallische Partikel, fällt durch Einwirkung der Gravitation auf den Boden des Gehäuses. Gemäss einer bevorzugten Ausführungsform der vorliegenden Erfindung ist das Gehäuse so ausgestaltet, dass es eine verschliessbare Öffnung, vorzugsweise in Form eines vom Gehäuse zumindest teilweise abtrennbaren Bodenteils, zur Entfernung von Abscheidungen aufweist. Im Wartungsfall kann das Gehäuse geöffnet und das im Tangentialabscheider abgetrennte Material entnommen werden. Gemäss einer bevorzugten Ausführungsform der vorliegenden Erfindung weist das Gehäuse ein Bodenteil auf, welches beispielsweise das untere Zehntel des Gehäuses umfasst und mit Hilfe einer hermetischen Verbindung, vorzugsweise einem Schnellspannverschluss, an dem Gehäuse befestigt. Im Wartungsfall kann die hermetische Verbindung geöffnet und das Bodenteil heruntergeklappt beziehungsweise vollständig vom Gehäuse entfernt werden.

Der in der erfindungsgemässen Reinigungsvorrichtung zu verwendende Filtereinsatz kann eine definierte oder eine nicht definierte Maschengrösse aufweisen. Es können herkömmliche Filtereinsätze verwendet werden, welche den Betriebsbedingungen standhalten, beispielsweise den bei der erfindungsgemäss bevorzugten Ausführungsform der Verwendung der Reinigungseinheit in einem Vakuum-Druckgiessverfahren vorliegenden hohen Temperaturen und anwesenden metallischen Partikel. Beispielhaft seien Keramikfilter genannt. Erfindungsgemäss bevorzugt wird jedoch rostfreie Stahlwolle (Edelstahlwolle) als Filtermedium eingesetzt. Gemäss einer bevorzugten Ausführungsform der vorliegenden Erfindung ist der Filtereinsatz aus zwei mit Öffnungen versehenen Platten in der Einheit und zwischen den Platten angeordnetem Filtermedium, vorzugsweise Edelstahlwolle, aufgebaut. Die Platten weisen hierbei ausreichend grosse und/oder zahlreiche Öffnungen auf, dass das zu reinigende Medium ohne wesentlichen Druckabfall durch den Filtereinsatz strömen kann. Gemäss einer weiteren Ausführungsform kann der Filtereinsatz aus einer vorgefertigten Filterkartusche bestehen, welche entsprechend den vorstehend beschriebenen Platten ausgebildete Boden- und Deckflächen aufweist und in ihrem Innern das Filtermedium (beispielsweise Edelstahlwolle) enthält.

Gemäss einer bevorzugten Ausführungsform der vorliegenden Erfindung ist die den Filtereinsatz umfassende Einheit derart ausgestaltet, dass sie vorzugsweise einstückig mit dem Gehäuse ausgebildet ist, ein Teil, vorzugsweise ein Rohr, wie vorstehend beschrieben in das Gehäuse ragt und ein anderer Abschnitt der Einheit sich ausserhalb des Gehäuses befindet. Vorzugsweise befindet sich in diesem Abschnitt ausserhalb des Gehäuses der Filtereinsatz. Besonders bevorzugt ist das in das Gehäuse ragende Teil ein Rohr, welches mit einem Ende mit dem im Gehäuse angeordneten Tangentialabscheider verbunden ist und mit dem anderen Ende in den Abschnitt mündet, in welchem sich der Filtereinsatz befindet.

In dem vorstehend beschriebenen Abschnitt der Einheit befindet sich vorzugsweise auch der Auslass, aus welchem das aufgereinigte Medium die erfindungsgemässe Reinigungsvorrichtung verlässt. Besonders bevorzugt befindet sich der Auslass seitlich an dem Abschnitt. Dadurch ist es möglich, diesen Abschnitt der Einheit mit einer verschliessbaren Öffnung, vorzugsweise in Form eines zumindest teilweise abnehmbaren Deckels, zu versehen. Im Wartungsfall kann dieser Abschnitt der Einheit geöffnet und der in dem Abschnitt angeordnete Filtereinsatz bearbeitet oder entnommen und beispielsweise ausgetauscht werden. Gemäss einer bevorzugten Ausführungsform der vorliegenden Erfindung weist der Abschnitt einen Deckel auf, welcher mit Hilfe einer hermetischen Verbindung, vorzugsweise einem Schnellspannverschluss, an dem Abschnitt befestigt ist. Im Wartungsfall kann die hermetische Verbindung geöffnet und der Deckel aufgeklappt beziehungsweise vollständig vom Abschnitt entfernt werden.

Vorzugsweise sind an dem Auslass Vorrichtungen für eine, vorzugsweise hermetische, Verbindung der Reinigungsvorrichtung mit Bauteilen einer Anlage angeordnet. Erfindungsgemäss bevorzugt wird der Auslass der Reinigungsvorrichtung mit einer Pumpe, vorzugsweise Vakuumpumpe, oder einer zu einer Pumpe, vorzugsweise Vakuumpumpe, führenden Leitung verbunden. Die Verbindung erfolgt hierbei vorzugsweise über einen Schnellspannverschluss (z.B. Schnellspannverschluss DN 40 ISO-KF).

Gemäss einer weiteren bevorzugten Ausführungsform umfasst die erfindungsgemässe Reinigungsvorrichtung an der den Filtereinsatz enthaltenden Einheit eine Vorrichtung zur Messung eines Druckabfalls am Filtereinsatz. Beispielsweise kann diese Druckmessvorrichtung so ausgestaltet sein, dass sie ein stromaufwärts vom Filtereinsatz in die Einheit mündendes Rohr und ein stromabwärts vom Filtereinsatz in die Einheit mündendes Rohr und eine mit den Rohren verbundene Druckmesseinheit umfasst. Auf bekannte Weise kann somit die Druckdifferenz zwischen einer Position stromaufwärts und einer Position stromabwärts des Filtereinsatzes bestimmt werden. Ein starker Druckabfall ist ein Indiz für ein Verstopfen des Filtereinsatzes und somit für eine gegebenenfalls erforderliche Wartung der Reinigungsvorrichtung durch Reinigung oder Austausch des Filtereinsatzes. Druckmesseinheiten sind dem Fachmann bekannt.

Die vorstehend beschrieben Reinigungsvorrichtung eignet sich insbesondere zur Verwendung in einer Vorrichtung zur Herstellung von Giessteilen, vorzugsweise einer Druckgiessvorrichtung. Besonders bevorzugt eignet sich die erfindungsgemässe Reinigungsvorrichtung zur Verwendung in einem Vakuum-Druckgiessverfahren.

Die vorliegende Erfindung betrifft somit auch eine Vorrichtung zur Herstellung von Giessteilen, vorzugsweise Druckgiessvorrichtung, umfassend eine erfindungsgemässe Reinigungsvorrichtung.

Druckgiessmaschinen für herkömmliche Druckgiessverfahren und Vakuum-Druckgiessverfahren sind dem Fachmann hinlänglich bekannt und müssen hier nicht im Detail beschrieben werden. Erfindungsgemäss bevorzugt sind Kaltkammer-Druckgiessmaschinen.

Zur Durchführung eines Vakuum-Drückgiessverfahrens ist in der Giessform ein Strömungskanal vorgesehen, der aus dem, dem herzustellenden Bauteil entsprechenden Hohlraum (auch als Kavität oder Formkontur bezeichnet) in eine Gasleitung führt, welche an eine Pumpe, vorzugsweise Vakuumpumpe, angeschlossen ist. Die fluidische Verbindung zwischen Hohlraum und Pumpe, vorzugsweise Vakuumpumpe, kann mit Hilfe einer Schliessvorrichtung, vorzugsweise einem Ventil geöffnet und geschlossen werden. In der Verbindungsleitung zwischen der Schliessvorrichtung und der Pumpe, vorzugsweise Vakuumpumpe, kann an einer gewünschten oder geeigneten Position die erfindungsgemässe Reinigungsvorrichtung in den Strömungsweg eingeführt werden, indem der Einlass der Reinigungsvorrichtung wie vorstehend beschrieben mit der vom Strömungskanal aus der Form kommenden Leitung und der Auslass der Reinigungsvorrichtung wie vorstehend beschrieben mit der Pumpe, vorzugsweise Vakuumpumpe, oder einer zu einer Pumpe, vorzugsweise Vakuumpumpe, führenden Leitung verbunden wird.

Gemäss einer weiteren Ausführungsform der vorliegenden Erfindung kann die erfindungsgemässe Reinigungsvorrichtung direkt an die Giesskammer einer Druckgiessmaschine angeschlossen werden. Dadurch wird eine effiziente Reinigung der in der Giesskammer vorhandenen Gastatmosphäre sowie eine schnellere Durchführung des Evakuierungsvorgangs erreicht. Das Anschliessen der erfindungsgemässen Reinigungsvorrichtung an die Giesskammer kann auf herkömmliche Weise erfolgen, beispielsweise über eine Leitung, deren eines Ende mit einem Auslass der Giesskammer und deren anderes Ende mit dem Einlass der Reinigungsvorrichtung verbunden ist. Bei dieser Ausführungsform ist der Auslass der Reinigungsvorrichtung wie vorstehend beschrieben mit der Pumpe, vorzugsweise Vakuumpumpe, oder einer zu einer Pumpe, vorzugsweise Vakuumpumpe, führenden Leitung verbunden. In der Verbindung zwischen Giesskammer und Reinigungsvorrichtung ist eine Schliessvorrichtung wie ein Ventil angeordnet.

Die Pumpe kann bei dieser Ausführungsform wahlweise zusätzlich mit der vorstehend beschriebenen, vom Strömungskanal aus der Form kommenden Leitung verbunden werden. Hierbei kann, wie vorstehend beschrieben, die erfindungsgemässe Reinigungsvorrichtung in den aus dem Hohlraum der Form kommenden Strömungsweg eingeführt werden, indem der Einlass der Reinigungsvorrichtung wie vorstehend beschrieben mit der vom Strömungskanal aus der Form kommenden Leitung und der Auslass der Reinigungsvorrichtung wie vorstehend beschrieben mit der Pumpe, vorzugsweise Vakuumpumpe, oder einer zu einer Pumpe, vorzugsweise Vakuumpumpe, führenden Leitung verbunden wird. Bei dieser Ausführungsform genügt es aber gemäss einer weiteren Variante, in diesen aus dem Hohlraum der Form kommenden Strömungsweg ein Standardfilterelement einzusetzen, da die Reinigung der Gasatmosphäre der Giesskammer bei dieser Ausführungsform hauptsächlich über die an die Giesskammer angeschlossene erfindungsgemässe Reinigungsvorrichtung erfolgt.

Die vorliegende Erfindung betrifft weiterhin ein Verfahren zur Herstellung von Giessteilen, vorzugsweise aus Metall oder metallischen Legierungen, mit einer vorstehend beschriebenen Vorrichtung zur Herstellung von Giessteilen, vorzugsweise einer Druckgiessvorrichtung, umfassend die Schritte des hermetischen Abschliessens des Hohlraums einer Giessform von der Umgebung, der zumindest teilweisen Entfernung der Gasatmosphäre aus der Giesskammer und dem Hohlraum der Giessform, und des Einfüllens von Giessmaterial in den Hohlraum der Giessform, wobei die aus der Giesskammer und/oder dem Hohlraum entfernte Gasatmosphäre durch eine Reinigungseinheit geleitet wird.

Bei einer Kaltkammer-Druckgiessmaschine wird das geschmolzene Giessmaterial über eine Einfüllöffnung in eine Giesskammer geführt und durch eine Bewegung eines Giesskolbens unter Druck aus der Giesskammer in den Hohlraum der Giessform gepresst. Die Giesskammer ist horizontal zur Giessform angeordnet.

Wird der Giesskolben in der Giesskammer nach vorne bewegt, d.h. in Richtung auf die Giesform, gelangt er ab einem bestimmten Zeitpunkt in eine Position zwischen Einfüllöffnung und Giessform und unterbricht die fluidische Verbindung zwischen der Einfüllöffnung der Giesskammer und dem Hohlraum der Giessform. Der Hohlraum der Giessform und der mit dem Hohlraum der Giessform fluidisch verbundene Kolbenraum der Giesskammer sind nun hermetisch von der Umgebung abgeriegelt.

Nun wird die aus der Giessform oder aus der Giesskammer herausführende Schliessvorrichtung, vorzugsweise ein Ventil, geöffnet und die Gasatmosphäre in dem Hohlraum der Giessform und dem mit der Giessform fluidisch verbundenen Kolbenraum der Giesskammer mit Hilfe einer Pumpe, vorzugsweise einer Vakuumpumpe, aus diesen Räumen entfernt. Üblicherweise wird beim Vakuum-Druckgiessverfahren in diesem Verfahrensschritt ein Unterdruck im Bereich von 50 mbar bis 200 mbar, vorzugsweise von 100 mbar bis 150 mbar, in der Giessform erzeugt. Da das sich in der Giesskammer befindliches Giessmaterial geschmolzen ist, kann es vergleichsweise leicht mit dem Gas mitgezogen werden. Das Gas und das eventuell mitgezogene Giessmaterial wird daher durch die erfindungsgemässe Reinigungsvorrichtung geführt und so verhindert, dass das Giessmaterial in die Pumpe gelangt.

Nach Erreichen des gewünschten Unterdrucks in der Giessform wird das Giessmaterial auf bekannte Weise durch Bewegung des Giesszylinders unter Druck in den Hohlraum der Giessform gepresst. Vorzugsweise im letztmöglichen Augenblick der Füllung der Giessform wird die aus der Giessform führende Schliessvorrichtung, vorzugsweise ein Ventil, geschlossen. Auf diese Weise wird eine maximale Abführung des Gases aus der Giessform erreicht. Es schliesst sich in der Regel noch eine Nachdruckphase und eine Abkühlphase an. Anschliessend wird das fertige Giessteil aus der Form entnommen, indem die beiden Formhälften voneinander getrennt werden.

Das Druckgiessverfahren wird bei kommerziellen Druckgiessmaschinen wie der Druckgiessmaschine CARAT® der Firma Bühler computergesteuert. Dies ist dem Fachmann bekannt und muss an dieser Stelle nicht weiter ausgeführt werden.

Während des Druckgiessverfahrens wird gemäss einer bevorzugten Ausführungsform der vorliegenden Erfindung der Druck am Filtereinsatz der Reinigungsvorrichtung kontrolliert, vorzugsweise mit der vorstehend beschriebenen Druckmessvorrichtung. Wird ein signifikanter Druckabfall am Filtereinsatz beobachtet, sollte der Prozessablauf unterbrochen und der Filtereinsatz bearbeitet oder ausgetauscht werden, um ein Verstopfen der Reinigungseinheit und damit einen Vakuumabfall an der Giessform zu verhindern.

Die vorliegende Erfindung betrifft auch die Verwendung einer vorstehend beschriebenen Vorrichtung, vorzugsweise einer Druckgiessvorrichtung, zur Herstellung von Giessteilen, vorzugsweise aus Metall oder metallischen Legierungen, vorzugsweise in einem Vakuum-Giessprozess.

Die vorliegende Erfindung wird nachstehend anhand von bevorzugten Ausführungsformen und Zeichnungen näher erläutert. Es zeigen:
- Fig.1: eine schematische Ansicht einer Ausführungsform der erfindungsgemässen Reinigungsvorrichtung
- Fig. 2: eine schematische Ansicht einer Ausführungsform der erfindungsgemässen Druckgiessvorrichtung
- Fig. 3: eine schematische Ansicht einer weiteren Ausführungsform der erfindungsgemässen Druckgiessvorrichtung

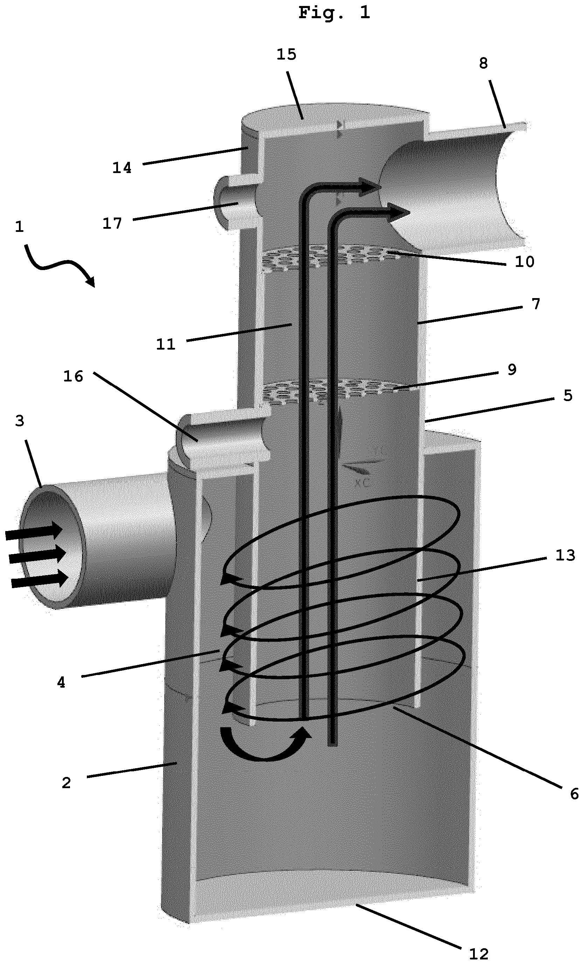

In Fig. 1 ist eine schematische Ansicht einer Ausführungsform der erfindungsgemässen Reinigungsvorrichtung 1, insbesondere für eine Druckgiessvorrichtung, gezeigt. Diese Reinigungsvorrichtung 1 umfasst ein Gehäuse 2 mit einem Einlass 3 für zu reinigendes Medium, welcher sich hier im oberen Drittel des Gehäuses 2 befindet. Im Gehäuse 2 ist stromabwärts vom Einlass 3 ein Fliehkraftabscheider 4 angeordnet, dessen äussere Begrenzung durch die zylindrische Innenwand des Gehäuses 2 gebildet wird. Auf dem Gehäuse 2 ist eine Einheit 5 angeordnet. In dieser Ausführungsform ist die Einheit 5 einstückig mit dem Gehäuse 2 ausgebildet. Die Einheit 5 ragt mit einem Teil durch die Deckenfläche des Gehäuses 2 in das Gehäuse, genauer hier in den im Gehäuse 2 angeordneten Fliehkraftabscheider 4. Das in das Gehäuse 2 ragende Teil der Einheit 5 ist hier als Rohr 13 ausgebildet. Die Aussenwand des Rohrs 13 bildet somit die innere Begrenzung des Fliehkraftabscheiders 4. Am unteren Ende des Rohrs 13 ist eine Öffnung 6 vorhanden. Gemäss der hier gezeigten Ausführungsform ist die gesamte Bodenfläche des Rohrs 13 offen, d.h. bildet die Öffnung 6.

Das zu reinigende Medium tritt durch den Einlass 3 in den Fliehkraftabscheider 4 ein und wird wie in Fig. 1 gezeigt kreisförmig durch den Fliehkraftabscheider 4 nach unten bewegt. Hierbei wird durch die Wirkung der Fliehkraft im Medium vorhandenes Material abgetrennt, gegen die Innenwand des Gehäuses 2 bewegt und sinkt schliesslich aufgrund der Gravitationswirkung nach unten auf ein Bodenteil 12. Dieses Bodenteil 12 kann (hier nicht dargestellt) vom Gehäuse 2 zumindest teilweise abgetrennt werden, um Abscheidungen aus dem Gehäuse 2 zu entnehmen.

Das zu reinigende Medium wird wie in Fig. 1 gezeigt durch die Öffnung 6 aus dem Fliehkraftabscheider 6 in das Rohr 13 geführt. Das Medium wandert wie in Fig. 1 gezeigt durch das Rohr 13 nach oben bis zu einem in der Einheit 5 angeordneten Filtereinsatz 7. In der Ausführungsform gemäss Fig. 1 ist der Filtereinsatz aus zwei mit Öffnungen versehenen Platten 9, 10 in der Einheit 5 und zwischen den Platten 9, 10 angeordnetem Filtermedium 11, vorzugsweise Edelstahlwolle, aufgebaut.

Das Medium verlässt nach Durchströmen des Filtereinsatzes 7 wie in Fig. 1 gezeigt die Reinigungsvorrichtung 1 durch einen stromabwärts des Filtereinsatzes 7 angeordneten Auslass 8.

Das Rohr 13 der Einheit 5 mündet ausserhalb des Gehäuses 2 in einen Abschnitt 14 der Einheit 5, in welchem sich der Filtereinsatz 7 befindet und an welchem der Auslass 8, wie in Fig. 1 gezeigt vorzugsweise seitlich, angeordnet ist. Der Abschnitt 14 der Einheit 5 weist in der Ausführungsform gemäss Fig. 1 eine verschliessbare Öffnung 15, hier in Form eines zumindest teilweise abnehmbaren Deckels, auf.

An der Einheit 5 ist bei der Ausführungsform gemäss Fig. 1 eine (nicht vollständig gezeigte) Vorrichtung zur Messung eines Druckabfalls am Filtereinsatz 7 angeordnet. In der hier gezeigten Ausführungsform umfasst die Druckmessvorrichtung ein stromaufwärts vom Filtereinsatz 7 in die Einheit 5 mündendes Rohr 16 und ein stromabwärts vom Filtereinsatz 7 in die Einheit 5 mündendes Rohr 17 und eine mit den Rohren 16,17 verbundene (nicht gezeigte) Druckmesseinheit.

An dem Einlass 3 und dem Auslass 8 sind (nicht gezeigte) Vorrichtungen für eine, vorzugsweise hermetische, Verbindung der Reinigungsvorrichtung 1 mit Bauteilen einer Anlage angeordnet.

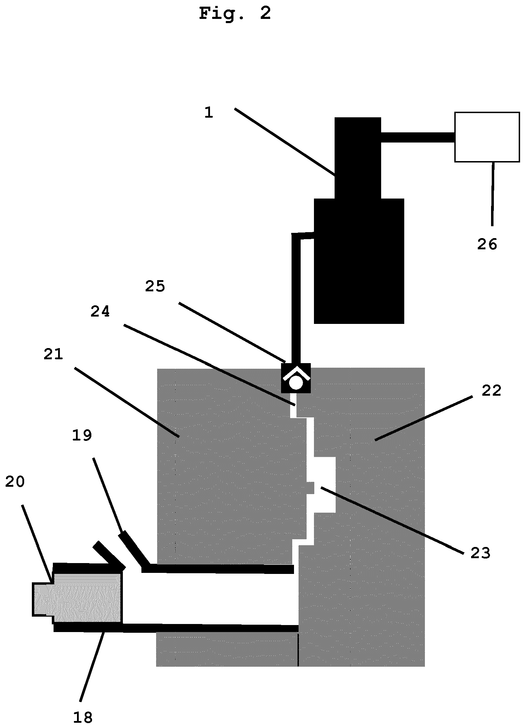

Fig. 2 zeigt eine schematische Ansicht einer Ausführungsform der erfindungsgemässen Druckgiessvorrichtung. Die in Fig. 2 gezeigte Kaltkammer-Druckgiessvorrichtung umfasst eine horizontal angeordnete Giesskammer 18, welche einen in der Giesskammer 18 beweglichen Giesskolben 20 und eine Einfüllöffnung 19 zum Einfüllen des Giessmaterials in die Giesskammer 18 aufweist.

Die Giessform wird durch zwei Formhälften 21 und 22 gebildet, die zusammen in Schliessposition einen Hohlraum 23 bilden, welcher die eigentliche Kavität zur Herstellung eines Giessteils darstellt. Der Hohlraum 23 ist über einen Strömungskanal 24 mit der Reinigungsvorrichtung 1 verbunden. Diese Verbindung kann mit Hilfe eines Schliessventils 25 unterbrochen werden. Der Auslass der Reinigungsvorrichtung 1 ist mit einer Vakuumpumpe 26 verbunden.

Wird der Giesskolben 20 in der Giesskammer 18 nach rechts bewegt, verschliesst der Giesskolben 20 ab einer bestimmten Position die Einfüllöffnung 19. Der rechte Teil der Giesskammer 18 (Kolbenraum) sowie der Hohlraum 23 sind nun bei geschlossenem Ventil 25 von der Umgebung hermetisch abgeschlossen. Wenn man das Ventil 25 öffnet und die Pumpe 26 aktiviert, wird die im Kolbenraum der Giesskammer 18 sowie im Hohlraum 23 befindliche Gasatmosphäre zusammen mit einem Teil des Giessmaterials durch den Strömungskanal 24 in die Reinigungsvorrichtung 1 gezogen, wo das Medium wie vorstehend beschrieben gereinigt wird. Das gereinigte Medium (hier Gas) verlässt die Reinigungsvorrichtung 1 und gelangt zur Vakuumpumpe 26. Das Vakuum-Druckgiessverfahren kann nun wie vorstehend beschrieben durchgeführt werden.

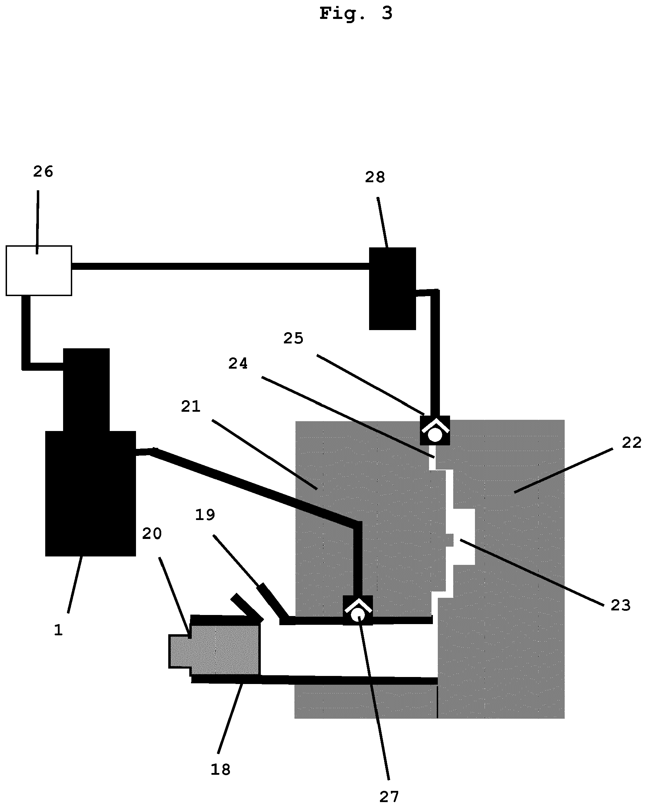

Fig. 3 zeigt eine schematische Ansicht einer weiteren Ausführungsform der erfindungsgemässen Druckgiessvorrichtung. Die Druckgiessvorrichtung gemäss Fig. 3 entspricht in grossen Teilen der in Fig. 2 gezeigten Druckgiessvorrichtung. Gleiche Bezugszeichen in den Figuren 2 und 3 bezeichnen gleiche Elemente. Bei der Ausführungsform gemäss Fig. 3 ist jedoch die erfindungsgemässe Reinigungsvorrichtung 1 über ein Schliessventil 27 direkt mit der Giesskammer 18 verbunden. Der Hohlraum 23 ist über das Schliessventil 25 und den Strömungskanal 24 mit einem Standardfilterelement 28 verbunden. Die Auslässe der Reinigungsvorrichtung 1 und des Standardfilterelements 28 sind mit der Vakuumpumpe 26 verbunden.

Wird der Giesskolben 20 in der Giesskammer 18 nach rechts bewegt, verschliesst der Giesskolben 20 ab einer bestimmten Position die Einfüllöffnung 19. Der rechte Teil der Giesskammer 18 (Kolbenraum) sowie der Hohlraum 23 sind nun bei geschlossenen Ventilen 25 und 27 von der Umgebung hermetisch abgeschlossen. Wenn man das Ventil 27 öffnet und die Pumpe 26 aktiviert, wird die im Kolbenraum der Giesskammer 18 befindliche Gastatmosphäre zusammen mit einem Teil des Giessmaterials in die Reinigungsvorrichtung 1 gezogen, wo das Medium wie vorstehend beschrieben gereinigt wird. Das gereinigte Medium (hier Gas) verlässt die Reinigungsvorrichtung 1 und gelangt zur Vakuumpumpe 26. Wenn man zusätzlich das Ventil 25 öffnet, wird die im Hohlraum 23 verbliebene Gasatmosphäre durch das Standardfilterelement 28 in die Vakuumpumpe 26 gezogen. Das Vakuum-Druckgiessverfahren kann nun wie vorstehend beschrieben durchgeführt werden.

## Patentansprüche

1. Reinigungsvorrichtung (1), insbesondere für eine Druckgiessvorrichtung, umfassend ein Gehäuse (2) mit einem Einlass (3) für zu reinigendes Medium, einen im Gehäuse (2) stromabwärts vom Einlass (3) angeordneten Fliehkraftabscheider (4), eine auf dem Gehäuse (2) angeordnete und in den Fliehkraftabscheider (4) ragende, an ihrem unteren Ende, vorzugsweise in ihre Bodenfläche, mindestens eine Öffnung (6) aufweisende Einheit (5), wobei das zu reinigende Medium durch diese mindestens eine Öffnung (6) in die Einheit (5) eintreten kann, einen in der Einheit (5) derart angeordneten Filtereinsatz (7), dass das zu reinigende Medium durch die Einheit (5) nach oben strömt und dabei den in der Einheit (5) angeordneten Filtereinsatz (7) passiert, sowie einen stromabwärts des Filtereinsatzes (7) angeordneten Auslass (8).

2. Reinigungsvorrichtung nach Anspruch 1, **dadurch gekennzeichnet, dass** der Filtereinsatz (7) aus zwei mit Öffnungen versehenen Platten (9, 10) in der Einheit (5) und zwischen den Platten (9, 10) angeordnetem Filtermedium (11), vorzugsweise Edelstahlwolle, aufgebaut ist.

3. Reinigungsvorrichtung nach Anspruch 1 oder 2, **dadurch gekennzeichnet, dass** das Gehäuse (2) eine verschliessbare Öffnung, vorzugsweise in Form eines vom Gehäuse zumindest teilweise abtrennbaren Bodenteils (12), zur Entfernung von Abscheidungen aufweist.

4. Reinigungsvorrichtung nach einem der Ansprüche 1 bis 3, **dadurch gekennzeichnet, dass** die Einheit(5) ein in den Fliehkraftabscheider (4) ragendes Rohr (13) umfasst.

5. Reinigungsvorrichtung nach Anspruch 4, **dadurch gekennzeichnet, dass** das Rohr (13) ausserhalb des Gehäuses (2) in einen Abschnitt (14) der Einheit (5) mündet, in welchen sich der Filtereinsatz (7) befindet und an welchem der Auslass (8), vorzugsweise seitlich, angeordnet ist.

6. Reinigungsvorrichtung nach Anspruch 5, **dadurch gekennzeichnet, dass** der Abschnitt (14) der Einheit (5) eine verschliessbare Öffnung (15), vorzugsweise in Form eines zumindest teilweise abnehmbaren Deckels, aufweist.

7. Reinigungsvorrichtung nach einem der Ansprüche 1 bis 6, **dadurch gekennzeichnet, dass** an der Einheit (5) eine Vorrichtung zur Messung eines Druckabfalls am Filtereinsatz (7) angeordnet ist, welche vorzugsweise ein stromaufwärts vom Filtereinsatz (7) in die Einheit (5) mündendes Rohr (16) und ein stromabwärts vom Filtereinsatz (7) in die Einheit (5) mündendes Rohr (17) und eine mit den Rohren (16,17) verbundene Druckmesseinheit umfasst.

8. Reinigungsvorrichtung nach einem der Ansprüche 1 bis 7, **dadurch gekennzeichnet, dass** am Einlass (3) und am Auslass (4) Vorrichtungen für eine, vorzugsweise hermetische, Verbindung der Reinigungsvorrichtung (1) mit Bauteilen einer Anlage angeordnet sind.

9. Vorrichtung zur Herstellung von Giessteilen, vorzugsweise Druckgiessvorrichtung, umfassend eine Reinigungsvorrichtung (1) gemäss einem der Ansprüche 1 bis 8.

10. Vorrichtung nach Anspruch 9, **dadurch gekennzeichnet, dass** der Einlass (3) der Reinigungsvorrichtung (1) mit dem Innern (23) der Giessform (21, 22) oder mit dem Innern der Giesskammer (18) verbunden ist, vorzugsweise über einen Strömungskanal (24) und mit einer im Strömungskanal angeordneten Schliessvorrichtung, insbesondere einem Ventil (25), beziehungsweise über eine an der Giesskammer (18) angeordnete Leitung und über eine in der Leitung angeordneten Schliessvorrichtung, insbesondere einem Ventil (27).

11. Vorrichtung nach Anspruch 9 oder 10, **dadurch gekennzeichnet, dass** der Auslass (8) der Reinigungseinheit (1) mit einer Pumpe (26), vorzugsweise einer Vakuumpumpe, verbunden ist.

12. Verwendung einer Reinigungsvorrichtung (1) gemäss einem der Ansprüche 1 bis 8 in einer Vorrichtung, vorzugsweise einer Druckgiessvorrichtung, zur Herstellung von Giessteilen.

13. Verfahren zur Herstellung von Giessteilen, vorzugsweise aus Metall oder metallischen Legierungen, mit einer Vorrichtung gemäss einem der Ansprüche 9 bis 11, vorzugsweise einer Druckgiessvorrichtung, umfassend die Schritte des hermetischen Abschliessens des Hohlraums (23) einer Giessform (21, 22) von der Umgebung, der zumindest teilweisen Entfernung der Gasatmosphäre aus der Giesskammer (18) und dem Hohlraum (23) der Giessform (21, 22), und des Einfüllens von Giessmaterial in den Hohlraum (23) der Giessform, wobei die aus der Giesskammer (18) und/oder dem Hohlraum (23) entfernte Gasatmosphäre durch eine Reinigungseinheit (1) geleitet wird.

14. Verfahren nach Anspruch 13, **dadurch gekennzeichnet, dass** der Schritt des Abschliessens des Hohlraums (23) einer Giessform (21, 22) von der Umgebung durch eine derartige Bewegung eines Giesskolbens (19) in einer Giesskammer (18), dass die Einfüllöffnung (20) der Giesskammer (18) nicht mehr mit dem Hohlraum (23) der Giessform (21, 22) fluidisch verbunden ist, durchgeführt wird.

15. Verwendung einer Vorrichtung gemäss einem der Ansprüche 9 bis 11, vorzugsweise einer Druckgiessvorrichtung, zur Herstellung von Giessteilen, vorzugsweise aus Metall oder metallischen Legierungen, vorzugsweise in einem Vakuum-Giessprozess.

## Claims

1. A cleaning device (1), in particular for a die-casting device, comprising a housing (2) having an inlet (3) for a medium to be cleaned, a centrifugal separator (4) which is disposed downstream of the inlet (3) in the housing (2), a unit (5) which is disposed on the housing (2) and protrudes into the centrifugal separator (4) and at the lower end thereof, preferably in the base area thereof, has at least one opening (6), wherein the medium to be cleaned may enter into the unit (5) through this at least one opening (6), a filter insert (7) which is disposed in the unit (5) such that the medium to be cleaned flows through the unit (5) in an upward direction and thereby passes the filter insert (7) disposed in the unit (5), and an outlet (8) which is disposed downstream of the filter insert (7).

2. The cleaning device according to claim 1, **characterized in that** the filter insert (7) is constructed from two plates (9, 10) in the unit (5), said plates (9, 10) being provided with openings, and from a filter medium (11), preferably stainless-steel wool, which is disposed between the plates (9, 10).

3. The cleaning device according to claim 1 or 2, **characterized in that** the housing (2) has a closable opening, preferably in the form of a base part (12), which is at least partially separable from the housing, for removing deposits.

4. The cleaning device according to one of claims 1 to 3, **characterized in that** the unit (5) has a pipe (13) which protrudes into the centrifugal separator (4).

5. The cleaning device according to claim 4, **characterized in that** the pipe (13) outside the housing (2) opens into a portion (14) of the unit (5) in which the filter insert (7) is located and on which the outlet (8) is, preferably laterally, disposed.

6. The cleaning device according to claim 5, **characterized in that** the portion (14) of the unit (5) has a closable opening (15), preferably in the form of an at least partially removable lid.

7. The cleaning device according to one of claims 1 to 6, **characterized in that** a device for measuring a pressure loss at the filter insert (7), which preferably comprises a pipe (16) which opens into the unit (5) upstream of the filter insert (7), a pipe (17) which opens into the unit (5) downstream of the filter insert (7) and a pressure measuring unit connected to the pipes (16, 17), is disposed on the unit (5).

8. The cleaning device according to one of claims 1 to 7, **characterized in that** devices for a preferably hermetic connection between the cleaning device (1) and components of a plant are disposed at the inlet (3) and at the outlet (4) .

9. A device for manufacturing castings, preferably a die-casting device, comprising a cleaning device (1) according to one of claims 1 to 8.

10. The device according to claim 9, **characterized in that** the inlet (3) of the cleaning device (1) is connected to the interior (23) of the casting mold (21, 22) or to the interior of the casting chamber (18), preferably by way of a flow duct (24) and a closing device, in particular a valve (25) disposed in the flow duct, or by way of a line disposed at the casting chamber (18) and a closing device, in particular a valve (27), disposed in the line, respectively.

11. The device according to claim 9 or 10, **characterized in that** the outlet (8) of the cleaning unit (1) is connected to a pump (26), preferably a vacuum pump.

12. The use of a cleaning device (1) according to one of claims 1 to 8 in a device, preferably a die-casting device, for manufacturing castings.

13. A method for manufacturing castings, preferably from metal or metallic alloys, with a device according to one of claims 9 to 11, preferably a die-casting device, the method comprising the following steps of:
- hermetically closing the void (23) of a casting mold (21, 22) in relation to the environment,
- at least partially removing the gaseous atmosphere from the casting chamber (18) and from the void (23) of the casting mold (21, 22), and
- filling casting material into the void (23) of the casting mold,
wherein the gaseous atmosphere removed from the casting chamber (18) and/or from the void (23) is directed through a cleaning unit (1).

14. The method according to claim 13, **characterized in that** the step of closing the void (23) of a casting mold (21, 22) in relation to the environment is performed by a movement of a casting piston (19) in a casting chamber (18) in such a manner that the filling opening (20) of the casting chamber (18) is no longer fluidically connected with the void (23) of the casting mold (21, 22).

15. The use of a device according to one of claims 9 to 11, preferably of a die-casting device, for manufacturing castings, preferably from metal or metallic alloys, preferably in a vacuum casting process.

## Revendications

1. Dispositif de purification (1), notamment destiné à un dispositif de moulage sous pression, comprenant un carter (2) doté d'une entrée (3) pour un milieu à purifier, un séparateur centrifuge (4) disposé dans le carter (2) en aval de l'entrée (3), une unité (5) disposée sur le carter (2) et pénétrant dans le séparateur centrifuge (4), présentant au moins un orifice (6) au niveau de son extrémité inférieure, de préférence, dans sa surface de fond, où le milieu à purifier peut pénétrer dans l'unité (5) au moins par cet orifice (6), un insert de filtre (7) disposé de telle manière dans l'unité (5) que le milieu à purifier s'écoule vers le haut à travers l'unité (5) et traverse ainsi l'insert de filtre (7) disposé dans l'unité (5), ainsi qu'une sortie (8) disposée en aval de l'insert de filtre (7).

2. Dispositif de purification selon la revendication 1, **caractérisé en ce que** l'insert de filtre (7) est monté à base de deux plaques (9, 10) munies d'orifices dans l'unité (5) et un milieu de filtration (11), de préférence, de la laine d'acier allié, disposé entre les plaques (9, 10).

3. Dispositif de purification selon la revendication 1 ou 2, **caractérisé en ce que** le carter (2) présente un orifice pouvant être refermé, de préférence, sous la forme d'une partie de fond (12) au moins partiellement séparable du carter pour le retrait de dépôts.

4. Dispositif de purification selon l'une des revendications 1 à 3, **caractérisé en ce que** l'unité (5) comprend un tuyau (13) pénétrant dans le séparateur centrifuge (4).

5. Dispositif de purification selon la revendication 4, **caractérisé en ce que** le tuyau (13) débouche à l'extérieur du carter (2) dans une section (14) de l'unité (5) dans laquelle se trouve l'insert de filtre (7) et dans laquelle est disposée la sortie (8), de préférence latéralement.

6. Dispositif de purification selon la revendication 5, **caractérisé en ce que** la section (14) de l'unité (5) présente un orifice (15) pouvant être refermé, de préférence, sous la forme d'un couvercle pouvant être enlevé au moins partiellement.

7. Dispositif de purification selon l'une des revendications 1 à 6, **caractérisé en ce qu'**un dispositif pour la mesure d'une chute de pression au niveau de l'insert de filtre (7) est disposé au niveau de l'unité (5), lequel comprend de préférence un tuyau (16) débouchant dans l'unité (5) en amont de l'insert de filtre (7) et un tuyau (17) débouchant dans l'unité (5) en aval de l'insert de filtre (7), et une unité de mesure de la pression reliée avec les tuyaux (16, 17).

8. Dispositif de purification selon l'une des revendications 1 à 7, **caractérisé en ce que** des dispositifs destinés à une liaison, de préférence hermétique, du dispositif de purification (1) avec des composantes d'une installation sont disposés au niveau de l'entrée (3) et de la sortie (4) .

9. Dispositif destiné à la fabrication de pièces moulées, de préférence dispositif de moulage sous pression, comprenant un dispositif de purification (1) selon l'une des revendications 1 à 8.

10. Dispositif selon la revendication 9, **caractérisé en ce que** l'entrée (3) du dispositif de purification (1) est reliée avec l'intérieur (23) du moule de coulée (21 22) ou avec l'intérieur de la chambre de moulage (18), de préférence par le biais d'un canal d'écoulement (24), et avec un dispositif de fermeture disposé dans le canal d'écoulement, notamment, une soupape (25), respectivement par le biais d'une conduite disposée dans la chambre de moulage (18) et par le biais d'un dispositif de fermeture, notamment une soupape (27), disposé dans la conduite.

11. Dispositif selon la revendication 9 ou 10, **caractérisé en ce que** la sortie (8) de l'unité de purification (1) est reliée avec une pompe (26), de préférence, une pompe à vide.

12. Utilisation d'un dispositif de purification (1) selon l'une des revendications 1 à 8 dans un dispositif, de préférence un dispositif de moulage sous pression, pour la fabrication de pièces moulées.

13. Procédé de fabrication de pièces moulées, de préférence à base d'un métal ou d'alliages métalliques, avec un dispositif selon l'une des revendications 9 à 11, de préférence, un dispositif de moulage sous pression, comprenant les étapes de fermeture hermétique de la cavité (23) d'un moule de coulée (21, 22) vis-à-vis de l'environnement, du retrait au moins partiel de l'atmosphère gazeuse de la chambre de moulage (18) et de la cavité (23) du moule de coulée (21, 22), et du remplissage de la cavité (23) du moule de coulée par de la matière à mouler, où l'atmosphère gazeuse retirée de la chambre de moulage (18) et/ou de la cavité (23) est menée à travers une unité de purification (1).

14. Procédé selon la revendication 13, **caractérisé en ce que** l'étape de fermeture de la cavité (23) d'un moule de coulée (21, 22) vis-à-vis de l'environnement est effectuée par un mouvement tel que celui d'un piston de moulage (19) dans la chambre de moulage (18), que l'orifice d'introduction (20) de la chambre de moulage (18) n'est plus relié de manière fluidique avec la cavité (23) du moule de coulée (21, 22).

15. Utilisation d'un dispositif selon l'une des revendications 9 à 11, de préférence d'un dispositif de moulage sous pression, pour la fabrication de pièces moulées, de préférence à base d'un métal ou d'alliages métalliques, de préférence dans un procédé de moulage sous vide.
